Europäisches Patentamt

(19) European Patent Office

Office européen des brevets

(11) Publication number : **0 185 465**
**B1**

(12) # EUROPEAN PATENT SPECIFICATION

(45) Date of publication of patent specification :
22.02.89

(51) Int. Cl.⁴ : **C 09 J 3/14, C 08 L 27/08**

(21) Application number : 85308355.8

(22) Date of filing : 15.11.85

(54) Aqueous latex copolymer compositions.

(30) Priority : 06.12.84 GB 8430858
21.02.85 GB 8504456
15.04.85 GB 8509560
20.05.85 GB 8512687
31.07.85 GB 8519224

(43) Date of publication of application :
25.06.86 Bulletin 86/26

(45) Publication of the grant of the patent :
22.02.89 Bulletin 89/08

(84) Designated contracting states :
AT BE CH DE FR GB IT LI LU NL SE

(56) References cited :
EP-A- 0 119 698
EP-A- 0 119 699

(73) Proprietor : IMPERIAL CHEMICAL INDUSTRIES PLC
Imperial Chemical House Millbank
London SW1P 3JF (GB)

(72) Inventor : Padget, John Christopher
21 Ennerdale Drive
Frodsham Cheshire WA6 7LF (GB)
Inventor : McIlrath, Donald Hugh
43 Church Road
Hale Liverpool L24 4AY (GB)

(74) Representative : Sheller, Alan et al
Imperial Chemical Industries PLC Legal Department:
Patents PO Box 6
Welwyn Garden City Herts, AL7 1HD (GB)

**Description**

The present invention relates to aqueous latex copolymer compositions which are particularly suitable for use in the provision of contact adhesives.

A contact adhesive is a substance which when coated on two substrates to be bonded enables a strong bond to be formed between the substrates on and after initial contact at ambient temperature without the requirement of any sustained pressure or setting time. The contact adhesive is applied to each substrate dissolved or dispersed in a liquid medium, the solutions or dispersions allowed to dry on each substrate, and the dried adhesive layers undergo rapid interfilm coalescence on contact to form almost instantaneously a strong bond ; this property is known as contactability.

In the past, contact adhesives have usually been applied as solvent-based compositions, i. e. in compositions wherein the adhesive substance has been dissolved in an organic liquid solvent. However, in recent years attention has been focussed on the toxicity, flammability and pollution problems associated with such systems. This has stimulated a desire to employ systems where the contact adhesive is less hazardously applied as an aqueous-based composition, i. e. in a composition wherein the adhesive substance is dispersed in water.

Currently, aqueous-based contact adhesive compositions appear to be mainly of two types : Neoprene or modified Neoprene-type compositions and acrylate-type compositions. Examples of the former type are described in US Patent 4 130 528 while examples of the latter type are described in US Patents 2 976 203, 2 976 204, 4 057 527, 4 280 942, and British Patent 1459843. The search for new aqueous-based contact adhesive compositions nevertheless continues with the objective of obtaining an improved balance of properties such as contactability, mature bond strength and high temperature creep performance.

In an initial approach to this problem we discovered that certain aqueous latex compositions comprising mixtures of two different types of copolymers were possessed of excellent utility as contact adhesive compositions. One such aqueous latex composition comprises a mixture of an amorphous copolymer (type A) comprising polymerised units of vinylidene chloride, an internally plasticising comonomer like 2-ethylhexyl acrylate or n-butyl acrylate, optionally vinyl chloride and optionally a copolymerisable acid, and having Tg in the range —50 to < 0 °C, and another amorphous copolymer (type B) comprising polymerised units of vinylidene chloride, an alkyl acrylate and/or methacrylate or certain other comonomers, optionally vinyl chloride, and optionally a copolymerisable acid, and having Tg in the range 0 to 30 °C. This type of composition is described in our European Patent Publication No. 0119698. Another such aqueous latex composition comprises a mixture of an amorphous copolymer (type A) comprising polymerised units of certain selected monomers preferably including vinylidene chloride, an internally plasticising comonomer like 2-ethylhexyl acrylate or n-butyl acrylate, optionally vinyl chloride, and optionally a copolymerisable acid, and having Tg in the range —50 to < 0 °C, and a crystalline copolymer (type B) comprising polymerised units of vinylidene chloride, and having a Tg which is not more than 30 °C.

This type of composition is described in our European Patent Publication No. 0119699. As an optional feature in these aqueous latex compositions, both types of copolymer in each composition can include polymerised units of a comonomer which provides a cross-linking functionality, such a comonomer causing cross-linking during the polymerisation to form the copolymer and/or providing a latent cross-linking functionality whereby cross-linking occurs after the copolymer has been formed (eg. on or after bond formation) either under the influence of an added cross-linking agent or without the requirement for such an agent.

We have now discovered that the aqueous latex compositions of the type described in European Patent Publications Nos 0119698 and 0119699 may be further improved by careful selection of the modal molecular weight of the copolymer of type A in either composition. The present application is directed towards the improved compositions of European Patent Publication No 0119699, while our copending application of even date is directed towards the improved compositions of European Patent Publication No 0119698.

According to the present invention there is provided an aqueous latex composition comprising at least one copolymer A and at least one copolymer B, wherein : A is an amorphous copolymer comprising polymerised units of at least one internally plasticising comonomer, and which copolymer has a Tg in the range —50 to < 0 °C ; and B is a crystalline copolymer comprising polymerised units of vinylidene chloride, and which copolymer has a Tg which is not more than 80 °C;

and wherein the dry weight ratio of the at least one copolymer A : the at least one copolymer B is from 95 : 5 to 10 : 90 ;

and wherein said at least one copolymer A has a modal molecular weight Mp (as herein defined) within the range 100,000 to 700,000 ;

and wherein said composition provides contactable layers after drying.

There is also provided according to the invention the use of an aqueous latex as defined above as a contact adhesive-forming composition. In accordance with the conventional method of contact bonding, such use is generally effected by coating two substrates to be bonded with the said aqueous latex composition, allowing the aqueous coating on each substrate to dry, and bringing the dry coated substrates into contact usually at ambient temperature and usually without any sustained pressure to effect contact.

The new aqueous latex compositions of the present invention possess a still further advantageous combination of properties for contact adhesive purposes than compositions exemplified in European Publication No 0119699 in which all copolymers A used in those examples had Mp well below 100,000, and in particular provide consistently improved combinations of shear strength and creep resistance for dried layers as well as having comparably good other properties such as contactability and 7-day bond strength.

In this specification, modal molecular weight Mp is defined as the molecular weight at the peak maximum of the molecular weight distribution curve obtained using a gel permeation chromatograph packed with beads of divinyl benzene gel and calibrated with polystyrene samples of known molecular weight and narrow molecular weight distribution (Weight Average Molecular Weight Mw/Number Average Molecular Weight $M_n$ = 1.05 to 1.07) to give a linear calibration between polystyrene molecular weights of 1 000 and $3.6 \times 10^6$. The weight average and number average molecular weights $M_w$ and $M_n$ and hence the heterogeneity index may also be determined from this distribution curve. The vinylidene chloride copolymer and polystyrene samples for gel permeation chromatography are used as solutions of 0.02 g polymer in 10 ml of H.P.L.C. grade tetrahydrofuran.

It is to be understood that the value of Mp used herein is the measurement obtained using only substantially gel-free copolymer. A copolymer A as used according to the invention may, if desired (although usually it is not preferred), have a degree of cross-linking that has been produced during the polymerisation ; this may result in a proportion of gel which, in a sample to be used for the estimation of Mp, is removed by filtration of the tetrahydrofuran solution to be injected into the gel permeation chromatograph before the measurement of Mp.

The copolymer A used in the invention should have Mp within the range 100,000 to 700,000 ; if its Mp is below 100,000, an aqueous composition having the improved balance of contact adhesive properties tends not to be obtained. A modal molecular weight Mp of above 700,000 is in our experience unattainable for the copolymer A used for this invention due to competing chain transfer reactions during polymerisation. The copolymer A used in the invention usually has Mp within the range 100,000 to 500,000, and more usually within the range 100,000 to 400,000 ; nevertheless copolymers A with Mp within the range 500,000 to 700,000 are not excluded from the present invention.

The Mp of copolymer B is not critical in the present invention and can be above or below 100,000.

By Tg is meant the glass transition temperature and it will be noted the Tg of copolymer B is not restricted to being less than or equal to 30 °C as in the compositions of European Publication No 0119699 but can have Tg in the range which is not more than 80 °C.

The copolymer A preferably comprises polymerised units (a) of at least one monomer selected from alkyl acrylates and methacrylates having 1 to 12 carbon atoms in the alkyl group, alkoxyalkyl acrylates and methacrylates having 1 to 12 carbon atoms in the alkyl group, vinylidene chloride, vinyl chloride acrylonitrile, styrene, vinyl acetate and vinyl ethyl ether.

The copolymer A preferably also comprises polymerised units of at least one copolymerisable ethylenically unsaturated acid.

The copolymer B generally comprises polymerised units of vinylidene chloride and polymerised units (b) of at least one comonomer selected from alkyl acrylates and methacrylates having 1 to 12 carbon atoms in the alkyl group, alkoxyalkyl acrylates and methacrylates having 1 to 12 carbon atoms in the alkyl group, vinyl chloride styrene, acrylonitrile, vinyl acetate, vinyl ethyl ether, ethylene, cis and trans 1,3-butadiene, cis and trans isoprene, cis and trans chloroprene, 1-decene, 1-pentene and 1-octene.

The copolymer B may optionally comprise polymerised units of at least one copolymerisable ethylenically unsaturated acid.

The copolymer B used in the present invention provides a resin which is partially crystalline (with greater than 5 % crystallinity and more usually greater than 15 % crystallinity), being either crystalline in the latex particles or crystallising on and/or after removal of the aqueous carrier — as for example on and/or after bond formation — particularly at ambient temperature. This provides a bond with very good low creep characteristics. It is to be understood that the crystallisation may often be slow. The copolymer A is amorphous (with less than 5 % and more usually substantially zero crystallinity) being non-crystalline while in the latex and not crystallising on and/or after removal of the aqueous carrier — as for example on and/or after bond formation.

The weight ratio of the at least one copolymer A : the at least one copolymer B is from 95 : 5 to 10 : 90. The preferred range is 85 : 15 to 15 : 85, particularly 80 : 20 to 20 : 80 (with 75 : 25 to 25 : 75 being a typical range in practice).

The aqueous latex compositions of the invention normally comprise only one copolymer A and only one copolymer B, although it is within the scope of the invention to include more than one copolymer A and/or more than one copolymer B. Other addition polymers may also be included if they have no deleterious effect.

The disposition of copolymers A and B in the aqueous latex composition of the invention is in the form of a mixture of the copolymers. This mixture may e. g. be a simple aqueous latex blend of the at least one copolymer A and the at least one copolymer B prepared by blending together aqueous latices of the separately prepared copolymers. Alternatively, the mixture may be made in-situ by forming the at least one copolymer A in the presence of the at least one copolymer B, or vice versa, using a sequential polymerisation process. When more than one copolymer A and/or copolymer B is used, these may be mixed by simple blending, or by a sequential polymerisation process, or by a combination of simple blending and sequential polymerisation.

The Tg of a copolymer will primarily be determined by the types and amounts of the individual comonomer units in the copolymer. Accordingly a variety of copolymers may readily be prepared having Tg within the ranges specified.

It may be noted that the Tg of a vinylidene chloride copolymer cannot be determined from a formula ; instead it is necessary to determine the Tg of such a copolymer by experiment. Typical examples of Tg verses composition relationships for vinylidene chloride copolymers are given in : « Polyvinylidene Chloride », R A Wessling, Gordon and Breach, Science Publishers 1977.

By an internally plasticising comonomer is meant a comonomer which gives a homopolymer (when polymerised alone) of very low Tg, preferably $\leqslant -40\,°C$, more preferably $\leqslant -50\,°C$, and so provides copolymerised units in a copolymer which (if present in sufficient proportion) tend to cause the polymer to be intrinsically plasticised and thereby have considerably lowered Tg in comparison to a polymer not having such units. Thus the use of such comonomers allows various desired values of Tg to be readily achieved. Suitable plasticising comonomers include certain kinds of alkyl and alkoxyalkyl acrylates such as n-butyl acrylate, 2-ethylhexyl acrylate, n-decyl methacrylate, n-octyl acrylate, 2-ethylbutyl acrylate, n-heptyl acrylate, 2-heptyl acrylate, n-hexyl acrylate, 3-methylbutyl acrylate, n-nonyl acrylate, 2-octyl acrylate, n-propyl acrylate, 1-ethoxyethyl acrylate, 1-ethoxypropyl acrylate, 2-methoxyethyl acrylate, 3-methoxypropyl acrylate and propoxylated acrylates and methacrylates, and other monomers such as ethylene, cis and trans 1,3-butadiene, cis and trans isoprene, cis and trans chloroprene, 1-decene, 1-pentene, and 1-octene. Of these, n-butyl acrylate and 2-ethylhexyl acrylate are usually preferred internally plasticising comonomers for copolymer A with n-butyl acrylate being particularly preferred.

It is thus apparent that in copolymer A, the polymerised units of the at least one plasticising comonomer can be provided by certain suitable polymerised units within the scope of (a) (e. g. from certain of the alkyl acrylates and methacrylates and alkoxyalkyl acrylates and methacrylates having 1 to 12 carbon atoms in the alkyl group as exemplified in the list above) and/or from suitable polymerised units outside the scope of (a).

The composition of copolymer A should be selected to provide a Tg in the range from $-50$ to $< 0\,°C$, and more preferably in the range from $-40$ to $-5\,°C$.

Possible copolymer compositions for A include polymers comprising 10 to 100 weight % of polymerised units (a) other than those of vinyl chloride, 0 to 90 weight % of polymerised units of at least one internally plasticising comonomer other than one or ones forming polymerised units within the scope of (a), 0 to 50 weight % of polymerised units of vinyl chloride, and 0 to 10 weight % of polymerised units of at least one copolymerisable ethylenically unsaturated acid.

Preferred copolymer compositions for A include copolymers comprising 10 to 70 weight % of polymerised units of vinylidene chloride, 30 to 90 weight % of polymerised units of at least one internally plasticising comonomer, 0 to 50 weight % of polymerised units of vinyl chloride, and 0 to 10 weight % of polymerised units of at least one copolymerisable ethylenically unsaturated acid. Minor amounts of polymerised units of other ethylenically unsaturated monomers may optionally be included in these preferred polymer compositions of A.

The proportion of polymerised units of vinylidene chloride in the above-mentioned preferred copolymer compositions for A is more preferably 20 to 60 weight %.

The proportion of polymerised units of the at least one internally plasticising comonomer in the above-mentioned preferred copolymer compositions for A is more preferably 40 to 80 weight %.

The proportion of polymerised units of vinyl chloride in the above-mentioned preferred copolymer compositions for A is more preferably 0 to 20 weight % and still more preferably 0 to 15 weight %.

The proportion of polymerised units of copolymerisable acid in the above-mentioned preferred copolymer compositions for A is more preferably 0.1 to % weight %, still more preferably 0.1 to 5 weight %, and yet more preferably 0.1 to 3 weight %.

The composition of copolymer B should be selected to provide a Tg which is not more than $80\,°C$. Preferably the Tg of B is within the range from $-50$ to $80\,°C$, and more preferably within the range from $-20$ to $60\,°C$. Other ranges are $-50$ to $30\,°C$ and $-20$ to $30\,°C$.

Preferred copolymer compositions for B are the copolymers comprising 70 to 98 weight % of polymerised units of vinylidene chloride, 2 to 30 weight % of polymerised units (b), and 0 to 10 weight % of polymerised units of at least one copolymerisable ethylenically unsaturated acid. Minor amounts of polymerised units of at least one other ethylenically unsaturated monomer may optionally be included in these preferred polymeric compositions of B.

The proportion of polymerised units of vinylidene chloride in the above-mentioned preferred copolymer compositions for B is more preferably 80 to 95 weight %.

The proportion of polymerised units (b) in the above-mentioned preferred copolymer compositions for B is more preferably 2 to 20 weight %.

The proportion of polymerised units of copolymerisable acid in the above-mentioned preferred copolymer compositions for B is more preferably 0.1 to 8 weight %, still more preferably 0.1 to 5 weight %, and yet more preferably 0.1 to 3 weight %.

The copolymer B may include polymerised units of at least one internally plasticising comonomer, such as ethylene, cis and trans 1,3-butadiene, cis and trans isoprene, cis and trans chloroprene, 1-decene, 1-pentene and 1-octene, and also certain kinds of alkyl and alkoxyalkyl acrylates and methacrylates as exemplified by the list provided above in respect of copolymer A, in order to readily achieve a desired value for Tg within the defined range. Such alkyl and alkoxyalkyl acrylates and methacrylates as exemplified above fall within the scope of the said alkyl and alkoxyalkyl acrylates and methacrylates having 1 to 12 carbon atoms in the alkyl group which comprise at least one of the comonomers which may be used to form the polymerised units (b) in copolymer B. The copolymer B may of course include polymerised units of at least one monomer within the scope of alkyl or alkoxyalkyl acrylates and methacrylates having 1 to 12 carbon atoms in the alkyl group which is not an internally plasticising comonomer. In some embodiments the copolymer B includes units of at least one comonomer (other than vinylidene chloride) of the non-internally-plasticising type (e. g. Tg ≤ — 40 °C) and no units of an internally plasticising comonomer, or vice versa. In other embodiments both types of unit are present.

In copolymer B, the at least one comonomer providing polymerised units (b) (selected from alkyl acrylates and methacrylates having 1 to 12 carbon atoms in the alkyl group, alkoxyalkyl acrylates and methacrylates having 1 to 12 carbon atoms in the alkyl group, vinyl chloride, styrene, acrylonitrile, vinyl acetate, vinyl ethyl ether ethylene, cis and trans 1,3-butadiene, cis and trans isoprene, cis and trans chloroprene, 1-decene, 1-pentene, and 1-octene ether) is preferably at least one comonomer selected from alkyl acrylates and methacrylate having 1 to 12 carbon atoms in the alkyl group and vinyl chloride. Examples of such alkyl acrylates and methacrylates include n-butyl acrylate and methacrylate, sec-butyl acrylate, tert-butyl acrylate, cyclohexyl acrylate, n-dodecyl acrylate and methacrylate, ethyl acrylate and methacrylate, 5-ethyl-2-nonyl acrylate, 2-ethylbutyl acrylate, n-heptyl acrylate, n-hexyl acrylate, isobutyl acrylate and methacrylate, isopropyl acrylate and methacrylate, methyl acrylate and methacrylate, 2-methylbutyl acrylate, 3-methylbutyl acrylate, n-octyl acrylate and methacrylate, 2-octyl acrylate, 3-pentyl acrylate and methacrylate, n-propyl acrylate, and 2-ethylhexyl acrylate and methacrylate. As discussed above, some of these monomers are of the internally plasticising type while others are of the non-internally plasticising type ; both types of monomer may be used, either together or alone. Preferably the at least one comonomer selected from said alkyl acrylates and methacrylates having 1 to 12 carbon atoms in the alkyl group and vinyl chloride is at least one of methyl acrylate, methyl methacrylate, 2-ethylhexyl acrylate, and vinyl chloride.

The copolymer A and/or the copolymer B of the present invention may optionally contain polymerised units of at least one multi-functional comonomer that has effected, when present, a partial (in the sense of a degree of) cross-linking during the polymerisation (resulting in the formation of some insoluble gel), as this can sometimes improve the creep performance properties of the copolymer. Multi-functional comonomers providing this type of cross-linking are polyunsaturated monomers examples of which include allyl methacrylate, diallyl maleate, diallyl phthalate and divinyl benzene.

Thus units of such multi-functional comonomers can be present in an amount usually in the range of up to 10 weight %, i. e. the copolymer may comprise 0 to 10 weight % of such units, (preferably 0.01 to 5 weight %). Nevertheless, even though such cross-linking may be used, it is not usually preferred that a copolymer A and/or B according to composition of the invention contains such polymerised units ; this is because the partial cross-linking effected during polymerisation sometimes adversely effects the contactability properties of the resulting composition, and, although a small degree of such cross-linking can be tolerated, it is not recommended as a general rule.

Besides optionally including polymerised units of at least one multi-functional comonomer which causes cross-linking during polymerisation, the copolymer A and/or B of the invention may also optionally possess polymerised units of at least one comonomer which provides a latent cross-linking functionality ; a latent cross-linking functionality is one where the functional group or groups of the comonomer cause cross-linking not during polymerisation but subsequent to polymerisation (e. g. on or after bond formation), and this can also sometimes enhance the creep properties of the copolymer composition. The latent cross-linking functionality can be one which is activated by the presence in the composition of a cross-linking agent (e. g. a divalent metal ion such as zinc) or can be one which is activated without the requirement for a cross-linking agent e. g. spontaneously at ambient temperature on ageing or more usually under the influence of heat. Examples of comonomers having a latent type of cross-linking functionality where latent cross-linking is possible either at ambient temperature on ageing, or by heating, or by virtue of an externally added cross-linking agent or by more than one of these possibilities, have functional groups capable of cross-linking by various mechanisms including self cross-linking or mutual cross-linking by different functional groups, both in the polymer chain ; examples of comonomers providing this type of cross-linking funtionality include comonomers having reactive polar groups such as hydroxyl, thiol, amino, amide, isocyanate, nitrile, carboxy, and epoxide groups. Examples of such comonomers include glycidyl methacrylate and acrylate, methylaminoethyl methacrylate and acrylate, t-butylaminoethyl methacrylate and acrylate, methacrylamide, 4-pentanoguanamine, hydroxylalkyl esters such as hydroxypropyl methacrylate, hydroxyethyl methacrylate and hydroxyethyl acrylate, methacrylonit-

EP 0 185 465 B1

rile, N-alkoxyalkyl amides such as methoxymethyl methacrylamide and butoxy-methyl acrylamide, and hydroxyalkyl amides such as N-methylol methacrylamide and N-methylol acrylamide, and dicarboxylic acids such as maleic acid. The at least one monomer to provide a latent cross-linking functionality is usually used in an amount to provide 0 to 10 weight % and, if present, usually 0.01 to 10 weight % of polymerised units in the copolymers A and B.

In the copolymers A and B in the compositions of the invention the at least one ethylenically unsaturated copolymerisable acid, if used, which primarily provides an adhesion-promoting functionality, is preferably an ethylenically unsaturated carboxylic acid or a sulphonic acid, such as 2-acrylamide-2-methylpropane sulphonic acid. Particularly preferred acids are aliphatic alpha, beta-unsaturated carboxylic acids and especially acrylic acid ; other carboxylic acids of this type which may be used include methacrylic acid, itaconic acid and citraconic acid. Other monomers which provide an adhesion-promoting functionality may be used in conjunction with or in place of the ethylenically unsaturated acid (e. g. in an amount of 0 to 10 weight %). It may be mentioned that the at least one ethylenically unsaturated carboxylic acid can also provide units which impart a latent cross-linking functionality as discussed above if the composition includes a cross-linking agent.

The polymerisations to form the copolymers A and B may be carried out by known emulsion polymerisation techniques ; e. g. copolymerisation in an aqueous medium using a free radical-yielding initiator, and usually in the presence of a surface active agent.

A modal molecular weight Mp within the range 100,000 to 700,000 for the vinylidene chloride copolymer A of the invention may be achieved by appropriate adjustment of the polymerisation process to produce polymer of higher than usual molecular weight. For example, molecular weight can be increased by decreasing the polymerisation temperature ; however a decrease in temperature below about 40 °C may not be commercially attractive because heat transfer becomes difficult, with the result that long polymerisation reaction times and/or very low cooling water temperatures are required.

One effective method of increasing molecular weight to enable a modal molecular weight Mp within the defined range to be attained at the usual commercially attractive polymerisation temperatures (e. g. 40 to 70 °C) entails performing the polymerisation in such a way that the polymerisation is « monomer-flooded » for at least a substantial part, say at least 20 %, of the polymerisation. By the term « monomer-flooded » is meant that at any given instant during which the polymerisation is in this state then there is a significant proportion of free, unpolymerised monomeric material present in the reaction medium (say more than 5 % by weight based on the weight of polymer plus monomer in the reaction medium at that instant). Preferably the polymerisation is monomer-flooded for, say, at least 40 % of the polymerisation.

By contrast, vinylidene chloride-based copolymerisations are often performed under monomer-starved conditions for most of the polymerisation (i. e. the polymerisation is not monomer-flooded for most (say more than 80 %) of the polymerisation) in order to obtain a homogeneous copolymer or in order to minimise reaction pressure. (It may be mentioned here that all the exemplified copolymers A and B in our European Patent Publications 0119668 and 0119669 were performed under monomer-starved conditions). A typical procedure would be to add 5 to 20 % by weight, based on total monomeric material to be polymerised, of an initial monomer mixture to the reaction vessel and to react these monomers to an high degree of conversion (say to at least 95 % conversion), and to then feed the remaining monomers at a rate such that the free monomer concentration in the reaction medium does not rise during this stage of the polymerisation. Often, the initially introduced monomers are reacted to a very high conversion to form what is referred to as a seed latex. Such monomer-starved vinylidene chloride-based copolymerisations when used in an attempt to produce copolymers according to the invention do not generally yield molecular weights of 100,000 or above at reaction temperatures of 40 °C or above.

The proportion of free monomer present at any moment of time during polymerisation can be determined by sampling the polymerisation vessel, e. g. by using a pressure-tight sample bomb, and analysing for free unpolymerised monomer by gas-liquid chromatography. In practice a far simpler method to determine whether a polymerisation is monomer-flooded or monomer-starved at any stage of the polymerisation is to allow the polymerisation to proceed as before but to introduce no additional monomer. If the polymerisation is monomer-starved the polymerisation reaction will die away quite quickly (e. g. within 2-10 minutes). On the other hand, if the polymerisation is monomer-flooded the reaction will continue unaffected over this time scale.

There are a various ways of ensuring that the polymerisation is monomer-flooded for a substantial proportion of the polymerisation, e. g.:

(A) Addition of more than, say, 20 % (by weight) of the monomers to be polymerised, but less than the total amount to be polymerised, to the reaction vessel before the start of polymerisation and commencement of monomer feeding before the initial monomer mixture has reacted to a high degree of conversion. It is desirable in this variant to feed the remainder of the monomeric material at such a rate that the polymerisation remains monomer-flooded as defined above. In practice this monomer-flooded condition is maintained by controlling the rate of monomer addition relative to the rate of initiation. If however a large proportion of the monomer mixture (say more than 40 % by weight of the total monomers to be polymerised) is added to the reaction vessel before the start of polymerisation, then it will be appreciated that it is less important, though nevertheless desirable, that the subsequent monomer-

6

feeding stage of the polymerisation is maintained in a monomer-flooded state because high molecular weight polymer will be produced during the initial stage of the polymerisation.

(B) In an especially preferred method, monomer-flooding is ensured for a substantial proportion of the polymerisation by performing a series of separate monomer introductions often of equal weight and composition (discontinuous monomer feeding). Thus, for example, the monomer mixture to be polymerised is divided into a number of equal portions (e. g. 5 to 10), one portion is added to the reaction vessel and polymerisation is commenced. This portion is then reacted to, say, greater than 90 % conversion and a second portion of the monomer mixture is then added. This procedure is repeated until all the monomers have been introduced and polymerisation completed. This variant has the advantage of giving both high molecular weight and good colloid stability (i. e. low coagulum formation) and can be employed to give the desired modal molecular weight Mp within the defined range at the usual commercially attractive polymerisation temperatures (e. g. 40 to 70 °C).

It will be appreciated that the above two described techniques are only examples of how the polymerisation might be operated in a monomer-flooded condition, and that there are other possible detailed modifications of the procedure that could be employed to achieve the same objective.

The copolymer A used in the composition of the invention may optionally include a minor fraction (say up to 30 % by weight) of much lower molecular weight than that of the rest of the copolymer (having Mp well above 100,000) ; this may further enhance the contactability of the composition, although the effect is not always apparent. The production of such a copolymer A may be conveniently effected by conducting the copolymerisation to form copolymer A under conditions to give high molecular weight material, e. g. using monomer-flooded conditions, until most of the comonomers for the copolymerisation have been converted to copolymer (say 70 to 90 % by weight) and then changing the polymerisation conditions so that the last part of the copolymerisation is performed under conditions to give low molecular weight material, e. g. using monomer-starved conditions and adding a chain transfer agent, thereby yielding the minor low molecular weight fraction.

The modal molecular weight of the copolymer B is not critical ; typically Mp for copolymer B may be well below 100,000.

The aqueous latex composition of the invention preferably contains at least one tackifying resin in order to maximise the contact adhesive performance of the composition. A tackifying resin is a polymeric substance, usually a particular type of condensation polymer, known to the art for further improving the adhesive performance of adhesion-promoting polymers.

Therefore according to a further aspect of the invention there is provided an aqueous latex composition as defined above, wherein said composition includes at least one tackifying resin.

The at least one tackifying resin if employed is normally present in an amount of 5 to 100 %, more usually 10 to 60 % by weight, based on the combined dry weight of the copolymers A and B. Suitable tackifying resins include phenolic resins such as heat reactive alkylphenol/formaldehyde resins, hydroxyalkylated alkylphenol/formaldehyde resins, polyhydric phenol/formaldehyde resins, polyhydric, polynuclear phenol/formaldehyde resins, phenol/formaldehyde resins, and thermoplastic terpene/phenolic resins. The tackifying resin is preferably incorporated by simply mixing into the composition (with appropriate agitation, e. g. stirring) an aqueous dispersion of the tackifying resin, although the resin can be emulsified in-situ.

The aqueous latex composition of the invention may also include substances such as thickeners, stabilizers, humectants, fillers, surfactants, pigments, dyes, fungicides, coalescing agents, cross-linking agents, and/or other material required for any particular application. Such substances (if used) may be incorporated or formulated into the latex compositions of the present invention by any suitable technique, e. g. by simple mixing and stirring.

The composition of the present invention may be used to provide contact adhesion for a variety of substrates, the materials joined either being the same or (more usually) different. Such substrates include wood, paper, natural or artificial textiles, various forms of panelling such as plyboard, particleboard, plasterboard, various plastics materials, various minerals such as glass, asbestos, carbon fibre, concrete, plaster and ceramics, and metals such as iron, steel and aluminium.

The present invention is illustrated by the following examples ; the prefix C for an example denotes a comparative example ; unless otherwise specified all parts, percentages and ratios are on a weight basis.

Contactability in the examples is assessed by applying two brush coats of the aqueous latex composition (intended to provide the contact adhesive) to unproofed cotton duck (i. e. unproofed canvas), allowing the first brush coat to dry as indicated by a clearness of the adhesive film before applying the second coat. When the second adhesive coat is dry the coated surfaces are brought together under light hand roller pressure to form the adhesive bond the strength of which is then tested immediately as a 25 mm wide strip on an Instron tensile testing machine set at a crosshead speed of 10 cm/minute. By considering the initial bond strength it is possible to determine whether interfilm coalescence has occurred and hence whether or not the adhesive is contactable.

Creep at elevated temperatures of creep resistance unless otherwise specified is determined by preparing a test specimen as for contactibility but ageing for 7 days prior to testing. Creep resistance is assessed by equilibrating the sample at 60 °C and recording the distance peeled or crept in mm/minute under a static load of 1 kg. 7-Day Bond Strength is determined by preparing a test speciman as for contactability but leaving to age for 7 days prior to testing for bond strength.

7-Day Shear Strength is determined by preparing a 25 mm square lap joint from 4.5 inch × 1 inch × 0.25 inch Beechwood test strips conforming to Appendix A of BS 1204, 1956. 0.15 ml of adhesive composition is applied to each surface to be contacted and allowed to dry before contacting. The bond is aged for 7 days prior to testing on an Instron tensile testing machine at a withdrawal rate of 5 mm/minute.

The procedure for measurement of modal molecular weights Mp of the copolymers exemplified (as defined hereinbefore) involved dissolving 0.02 g of polymer in 10 ml of H.P.L.C. grade tetrahydrofuran and after filtration through a 0.2 micron membrane injecting on to the gel permeation chromatograph at a solvent flow rate of 1 ml/minute and a temperature of 40 °C. The weight of polymer eluted from the chromatograph was measured using an Applied Chromatograph Services mass detector, and was plotted as a function of elution time.

Tg's for the copolymers were determined by differential scanning calorimetry.

The key to the monomer notation used in the examples is as follows :
VDC vinylidene chloride
VC vinyl chloride
BA n-butyl acrylate
AA acrylic acid
EHA 2-ethylhexyl acrylate
BMA n-butyl methacrylate


Examples 1 to 7, C8 to C10

A series of VDC copolymers were prepared for use as copolymer A according to the invention in Examples 1 to 7 (for properties, see following Table 1). They were all amorphous and were formed using emulsion polymerisation under monomer-flooded conditions so as to obtain Mp's above 100,000.

Table 1

| Copolymer A composition | Tg °C | Mp | For use in Ex. No. |
|---|---|---|---|
| VDC/BA/AA 23.0/75.0/2.0 | -19 | 127224 | 1 |
| VDC/BA/AA 17.8/80.2/2.0 | -29 | 115070 | 2 |
| VDC/ BA / AA 27.1/70.9/2.0 | -12 | 129128 | 3 |
| VDC/ BA / AA 26.7/71.3/2.0 | -15 | 105995 | 4 |
| VDC/ BA / AA 27.1/70.9/2.0 | -13 | 115416 | 5 |
| VDC/ BA / AA 29.7/68.3/2.0 | -11 | 135313 | 6 |
| VDC/ BA / AA 29.8/68.2/2.0 | -11 | 268651 | 7 |

A second series of VDC copolymers (copolymers A) were prepared for use in Examples C8 to C10 (i. e. not according to the invention) (for properties, see Table 2 following). They were all amorphous and were prepared using emulsion polymerisation under monomer-starved conditions so as to obtain Mp's below 100,000.

Table 2

| Copolymer A[1] composition | Tg °C | Mp | For use in Ex. No. |
|---|---|---|---|
| VDC/ BA / AA 26.9/71.1/2.0 | −13 | 85655 | C8 |
| VDC/ BA / AA 28.3/69.7/2.0 | −11 | 64477 | C9 |
| VDC/EHA/BMA/AA 27.3/59.6/11.1/2.0 | −29 | 97935 | C10 |

It will be noted that the copolymers for use in Examples C8 and C9 were very similar to Example C2 of European Patent Publication No 0119699 (also prepared under monomer-starved conditions).

A crystalline copolymer (degree of crystallinity 27 % as assessed by infra red spectroscopy) for use as copolymer B in examples 1 to 7, C8 to C10 was prepared (as an aqueous emulsion : monomer-starved conditions) having the composition VDC/VC/EHA/AA 89.5/4.7/3.8/2.0 and Tg −3.5 °C. (The Mp was not measured because the copolymer was insoluble in THF on account of its high crystallity ; however, since it was made using monomer-starved conditions it should have Mp below 100,000). This was blended with the aqueous latices of copolymers A or A[1] to provide aqueous latex compositions according to the invention in Examples 1 to 7 and comparative aqueous latex compositions in Examples C10 to C12, the latices A or A[1] used in each blend being indicated in Tables 1 and 2 above. The ratio of copolymer A or A[1] to crystalline copolymer B in each blend (dry weight ratio of latex solids) was 70/30/w/w in each case. The aqueous blend compositions were formulated with the tackifying resin aqueous dispersion Ucar Phenolic Resin dispersion BKUA 2370 (manufactured by Union Carbide) by mixing and stirring to give a polymer/resin ratio of 3/1 w/w solids. The resulting formulations of the latex blend compositions were tested for contact adhesive performance as indicated in the following Table 3.

| Ex. No. | Contactability N | 7-Day Bond Strength N | Creep mm/min (1 kg) | 7-Day Shear Strength N |
|---|---|---|---|---|
| 1 | 33.9 | 52.9 | 8.6 | 1739 |
| 2 | 31.4 | 47.6 | 7.0 | 1133 |
| 3 | 25.0 | 66.6 | 3.4 | 2149 |
| 4 | 26.5 | 56.4 | 9.8 | 1987 |
| 5 | 22.0 | 55.5 | 9.1 | 2297 |

EP 0 185 465 B1

Table (Continued)

| Ex. No. | Contactability N | 7-Day Bond Strength N | Creep mm/min (1 kg) | 7-Day Shear Strength N |
|---------|------------------|----------------------|---------------------|------------------------|
| 6       | 14.3             | 77.8                 | 6.9                 | 2222                   |
| 7       | 19.3             | 71.3                 | 10.6                | 2112                   |
| C8      | 30.5             | 60.7                 | 35.9                | 1500                   |
| C9      | 24.9             | 56.9                 | 20.5                | 1953                   |
| C10     | 21.5             | 25.1                 | 60.0                | 1405                   |

It is seen that the compositions according to the invention provided a good balance of contact adhesive properties and in particular exhibited consistently improved combinations of 7-day shear strength and creep resistance in comparison to the comparative compositions.

Example 11

A further example of a copolymer A for use according to the invention, having a composition and Tg similar to the copolymer A used for example 3, was prepared using monomer-flooded conditions until a conversion of monomers to copolymer of about 80 % by weight had been reached at which stage the polymer had Mp of 136, 138. The remaining part of the polymerisation was carried our under monomer-starved conditions in the presence of 2 % lauryl mercaptan as chain transfer agent thereby introducing a minor amount of a low molecular weight fraction into the molecular weight distribution.

The copolymer A was blended 70/30 w/w with the latex of copolymer B described above. The aqueous blend composition was formulated with the tackifying phenolic resin BKUA 2370 to give a polymer/resin ratio of 65/35 w/w solids. The resulting formulation was tested for contact adhesive performance, the results being as follows :

| | |
|---|---|
| Contactability | 28.9 N |
| 7-Day Bond Strength | 44.9 N |
| Creep | 5.2 mm/min (1 kg) |
| 7-Day Shear Strength | 1455 N |

A good balance of contact adhesive properties was thus achieved.

**Claims**

1. An aqueous latex composition comprising at least one copolymer A at least one copolymer B, wherein :
A is an amorphous copolymer comprising polymerised units of at least one internally plasticising comonomer, and which copolymer has a Tg in the range — 50 to < 0 °C ; and
B is a crystalline copolymer comprising polymerised units of vinylidene chloride, and which copolymer has Tg which is not more than 80 °C
and wherein the dry weight ratio of the at least one copolymer A : the at least one copolymer B is from 95.5 to 10 : 90 ;
and wherein said at least one copolymer A has a modal molecular weight Mp (as herein defined) within the range 100,000 to 700,000 ;
and wherein said composition provides contactable layers after drying.

2. An aqueous latex composition according to claim 1 wherein said at least one copolymer A in said composition comprises polymerised units (a) of at least one monomer selected from alkyl acrylates and methacrylates having 1 to 12 carbon atoms in the alkyl group, alkoxyalkyl acrylates and methacrylates having 1 to 12 carbon atoms in the alkyl group, vinylidene chloride, vinyl chloride, acrylonitrile, styrene, vinyl acetate and vinyl ethyl ether.

3. An aqueous latex composition according to either Claim 1 or Claim 2 wherein said at least one copolymer A in said composition comprises polymerised units of at least one copolymerisable ethylenically unsaturated acid.

4. An aqueous latex composition according to any one of the preceding claims wherein said at least one copolymer B comprises polymerised units of vinylidene chloride and polymerised units (b) of at least one comonomer selected from alkyl acrylates and methacrylates having 1 to 12 carbon atoms in the alkyl group, alkoxyalkyl acrylates and methacrylates having 1 to 12 carbon atoms in the alkyl group, vinyl chloride, styrene, acrylonitrile, vinyl acetate, vinyl ethyl ether, ethylene, cis and trans 1,3-butadiene, cis and trans isoprene, cis and trans chloroprene, 1-decene, 1-pentene and 1-octene.

5. An aqueous latex composition according to any one of the preceding claims wherein said at least one copolymer B in said composition comprises polymerised units of at least one copolymerisable ethylenically unsaturated acid.

6. An aqueous latex composition according to any one of the preceding claims wherein the dry weight ratio of said at least one copolymer A : the at least one copolymer B is from 85 : 15 to 15 : 85.

7. An aqueous latex composition according to any one of the preceding claims wherein the Tg of said at least one copolymer A is in the range $-40$ to $-5\,^{\circ}C$.

8. An aqueous latex composition according to any one of the preceding claims wherein said at least one copolymer A comprises 10 to 100 weight % of polymerised units (a) other than those of vinyl chloride, 0 to 90 weight % of polymerised units of at least one internally plasticising comonomer other than one or ones forming polymerised units within the scope of (a), 0 to 50 weight % of polymerised units of vinyl chloride, and 0 to 10 weight % of at least one copolymerisable ethylenically unsaturated acid.

9. An aqueous latex composition according to any one of the preceding claims wherein said at least one copolymer A comprises 10 to 70 weight % of polymerised units of vinylidene chloride, 30 to 90 weight % of polymerised units of at least one internally plasticising comonomer, 0 to 50 weight % of polymerised units of vinyl chloride, and 0 to 10 weight % of polymerised units of at least one copolymerisable ethylenically unsaturated acid.

10. An aqueous latex composition according to Claim 9 wherein the proportion of polymerised units of vinylidene chloride in copolymer A is 20 to 60 weight %.

11. An aqueous latex composition according to either Claim 9 or Claim 10 wherein the proportion of polymerised units of said at least one internally plasticising comonomer in copolymer A is 40 to 80 weight %.

12. An aqueous latex composition according to any one of Claims 9 to 11 wherein the proportion of polymerised unit of said at least one copolymerisable ethylenically unsaturated acid in copolymer A is 0.1 to 8 weight %.

13. An aqueous latex composition according to any one of the preceding claims wherein the polymerised units of said at least one internally plasticising comonomer in copolymer A are derived from at least one monomer selected from n-butyl acrylate and 2-ethylhexylacrylate.

14. An aqueous latex composition according to any one of the preceding claims wherein the Mp of said at least one copolymer A is in the range of from 100,000 to 500,000.

15. An aqueous latex composition according to any one of the preceding claims wherein the Tg of said at least one copolymer B is in the range $-50$ to $80\,^{\circ}C$.

16. An aqueous latex composition according to any one of the preceding claims wherein said at least one copolymer B comprises 70 to 98 weight % of polymerised units of vinylidene chloride, 2 to 30 weight % polymerised units (b), and 0 to 10 weight % of polymerised units at least one copolymerisable ethylenically unsaturated acid.

17. An aqueous latex composition according to claim 16 wherein the proportion of polymerised units of vinylidene chloride in copolymer B is 80 to 95 weight %.

18. An aqueous latex composition according to either Claim 16 or Claim 17 wherein the proportion of polymerised units (b) in copolymer B is 2 to 20 weight %.

19. An aqueous latex composition according to any one of the claims 16 to 18 wherein the proportion of polymerised units of said at least one copolymerisable ethylenically unsaturated acid in copolymer B is 0.1 to 8 weight %.

20. An aqueous latex composition according to any one of the preceding claims characterised in that the at least one copolymer B includes polymerised units of at least one internally plasticising comonomer.

21. An aqueous latex composition according to any one of the preceding claims wherein said at least one copolymer B includes polymerised units of at least one comonomer (other than vinylidene chloride) which comonomer is not an internally plasticising comonomer.

22. An aqueous latex composition according to any one of the preceding Claims 4 to 21 wherein the polymerised units (b) in copolymer B are derived from at least one monomoner selected from alkyl acrylates and methacrylates having 1 to 12 carbon atoms in the alkyl group and vinyl chloride.

23. An aqueous latex composition according to claim 22 wherein the polymerised units (b) in

11

copolymer B is derived from methyl acrylate, methyl methacrylate, 2-ethylhexyl acrylate, n-butyl acrylate, and vinyl chloride.

24. An aqueous latex composition according to any one of the preceding claims wherein copolymer A and/or copolymer B comprises polymerised units of at least one copolymerisable ethylenically unsaturated acid selected from an ethylenically unsaturated carboxylic acid or sulphonic acid.

25. An aqueous latex composition according to claim 24 wherein said acid is an aliphatic alpha, beta unsaturated carboxylic acid.

26. An aqueous latex composition according to any one of the preceding claims wherein said copolymer A and/or copolymer B comprises polymerised units of at least one type of comonomer to provide a cross-linking functionality.

27. An aqueous latex composition according to any one of the preceding claims wherein said composition includes at least one tackifying resin.

28. An aqueous latex composition according to any one of the preceding claims wherein said copolymer A has been formed a monomoner-flooded polymerisation process.

29. The use of an aqueous latex composition according to any one of the preceding claims as a contact adhesive forming composition.

**Patentansprüche**

1. Wäßrige Latexzusammensetzung mit mindestens einem Copolymer A und mindestens einem Copolymer B, wobei

A ein amorphes Copolymer ist, das polymerisierte Einheiten von mindestens einem im Inneren plastifizierenden Comonomer aufweist und einen Tg in einem Bereich von — 50 bis < 0 °C besitzt und wobei

B ein kristallines Copolymer ist, das polymerisierte Einheiten von Vinylidenchlorid aufweist und einen Tg besitzt, der nicht größer ist als 80 °C,

wobei das Trockengewichtsverhältnis des mindestens einen Copolymers A zu dem mindestens einen Copolymer B 95 : 5 bis 10 : 90 beträgt,

wobei das mindestens eine Copolymer A ein modales Molekulargewicht Mp (wie hier definiert) in einem Bereich von 100.000 bis 700.000 aufweist,

und wobei die Zusammensetzung kontaktierbare Schichten nach dem Trocknen vorsieht.

2. Latexzusammensetzung nach Anspruch 1, bei der das mindestens eine Copolymer A der Zusammensetzung polymerisierte Einheiten (a) von mindestens einem Monomer aufweist, das aus Alkylacrylaten und methacrylaten mit 1 bis 12 C-Atomen in der Alkylgruppe, Alkoxyalkylacrylaten und methacrylaten mit 1 bis 12 C-Atomen in der Alkylgruppe, Vinylidenchlorid, Vinylchlorid, Acrylnitril, Styrol, Vinylacetat und Vinyläthyläthern ausgewählt ist.

3. Latexzusammensetzung nach Anspruch 1 oder 2, bei der das mindestens eine Copolymer A in der Zusammensetzung polymerisierte Einheiten von mindestens einer copolymerisierbaren äthylenisch ungesättigten Säure aufweist.

4. Latexzusammensetzung nach einem der vorangehenden Ansprüche, bei der das mindestens eine Copolymer B polymerisierte Einheiten von Vinylidenchlorid und polymerisierte Einheiten (b) von mindestens einem Comonomer aufweist, das aus Alkylacrylaten und methacrylaten mit 1 bis 12 C-Atomen in der Alkylgruppe, Alkoxyalkylacrylaten und methacrylaten mit 1 bis 12 C-Atomen in der Alkylgruppe, Vinylchlorid, Styrol, Acrylnitril, Vinylacetat, Vinyläthyläther, Äthylen, cis und trans 1,3-Butadien, cis und trans Isopren, cis und trans Chloropren, 1-Decen, 1-Penten und 1-Octen ausgewählt ist.

5. Latexzusammensetzung nach einem der vorangehenden Ansprüche, dadurch gekennzeichnet, daß das mindestens eine Copolymer B in der Zusammensetzung polymerisierte Einheiten von mindestens einer copolymerisierbaren äthylenisch ungesättigten Säure umfaßt.

6. Latexzusammensetzung nach einem der vorangehenden Ansprüche, dadurch gekennzeichnet, daß das Trockengewichtsverhältnis zwischen dem mindestens einen Copolymer A und dem mindestens einen Copolymer B 85 : 15 bis 15 : 85 beträgt.

7. Latexzusammensetzung nach einem der vorangehenden Ansprüche, dadurch gekennzeichnet, daß der Tg des mindestens einen Copolymers A im Bereich von — 40 bis — 5 °C liegt.

8. Latexzusammensetzung nach einem der vorangehenden Ansprüche, bei der das mindestens eine Copolymer A 10 bis 100 Gew.% von anderen polymerisierten Einheiten (a) als denen von Vinylchlorid, 0-90 Gew.% von polymerisierten Einheiten von mindestens einem im Inneren plastifizierenden Comonomer, das sich von dem oder denen unterscheidet, die polymerisierte Einheiten im Rahmen von (a) bilden, 0 bis 50 Gew.% von polymerisierten Einheiten von Vinylchlorid und 0 bis 10 Gew.% von mindestens einer copolymerisierbaren äthylenisch ungesättigten Säure umfaßt.

9. Latexzusammensetzung nach einem der vorangehenden Ansprüche, bei der das mindestens eine Copolymer A 10 bis 70 Gew.% von polymerisierten Einheiten von Vinylidenchlorid, 30 bis 90 % Gew.% von polymerisierten Einheiten von mindestens einem im Inneren plastifizierenden Comonomer, 0 bis 50 Gew.% von polymerisierten Einheiten von Vinylchlorid und 0 bis 10 Gew.% von polymerisierten Einheiten von mindestens einer copolymerisierbaren äthylenisch ungesättigten Säure umfaßt.

10. Latexzusammensetzung nach Anspruch 9, bei der der Anteil der polymerisierten Einheiten von Vinylidenchlorid im Copolymer A 20 bis 60 Gew.% beträgt.

11. Latexzusammensetzung nach Anspruch 9 oder 10, bei der der Anteil der polymerisierten Einheiten des mindestens einen im Inneren plastifizierenden Comonomers im Copolymer A 40 bis 80 Gew.% beträgt.

12. Latexzusammensetzung nach einem der Ansprüche 9 bis 11, bei der der Anteil der polymerisierten Einheiten der mindestens einen copolymerisierbaren äthylenisch ungesättigten Säure im Copolymer A 0,1 bis 8 Gew.% beträgt.

13. Latexzusammensetzung nach einem der vorangehenden Ansprüche, bei der die polymerisierten Einheiten des mindestens einen im Inneren plastifizierenden Comonomer im Copolymer A von mindestens einem Monomer abgeleitet sind, das aus n-Butylacrylat und 2-Äthylhexylacrylat ausgewählt ist.

14. Latexzusammensetzung nach einem der vorangehenden Ansprüche, bei der das Mp des mindestens einen Copolymers A im Bereich von 100.000 bis 500.000 liegt.

15. Latexzusammensetzung nach einem der vorangehenden Ansprüche, bei der der Tg des mindestens einen Copolymers B im Bereich von — 50 bis 80 °C liegt.

16. Latexzusammensetzung nach einem der vorangehenden Ansprüche, bei der das mindestens eine Copolymer B 70 bis 98 Gew.% von polymerisierten Einheiten von Vinylidenchlorid, 2 bis 30 Gew.% von polymerisierten Einheiten (b) und 0 bis 10 Gew.% von polymerisierten Einheiten mindestens einer copolymerisierbaren äthylenisch ungesättigten Säure umfaßt.

17. Latexzusammensetzung nach Anspruch 16, bei der der Anteil der polymerisierten Einheiten von Vinylidenchlorid im Copolymer B 80 bis 95 Gew.% beträgt.

18. Latexzusammensetzung nach Anspruch 16 oder 17, bei der der Anteil der polymerisierten Einheiten (b) im Copolymer B 2 bis 20 Gew.% beträgt.

19. Latexzusammensetzung nach einem der Ansprüche 16 bis 18, bei der der Anteil der polymerisierten Einheiten der mindestens einen copolymerisierbaren äthylenisch ungesättigten Säure im Copolymer B 0,1 bis 8 Gew.% beträgt.

20. Latexzusammensetzung nach einem der vorangehenden Ansprüche, dadurch gekennzeichnet, daß das mindestens eine Copolymer B polymerisierte Einheiten von mindestens einem im Inneren plastifizierenden Comonomer enthält.

21. Latexzusammensetzung nach einem der vorangehenden Ansprüche, bei der das mindestens eine Copolymer B polymerisierte Einheiten von mindestens einem Comonomer (einem anderen als Vinylidenchlorid) enthält, das kein im Inneren plastifizierendes Comonomer ist.

22. Latexzusammensetzung nach einem der vorangehenden Ansprüche 4 bis 21, bei der die polymerisierten Einheiten (b) im Copolymer B von mindestens einem Monomer abgeleitet sind, das aus Alkylacrylaten und -methacrylaten, die 1 bis 12 C-Atome in der Alkylgruppe aufweisen, und vinylchlorid ausgewählt ist.

23. Latexzusammensetzung nach Anspruch 22, bei der die polymerisierten Einheiten (b) im Copolymer B von Methylacrylat, Methylmethacrylat, 2-Äthylhexylacrylat, n-Butylacrylat und Vinylchlorid abgeleitet sind.

24. Latexzusammensetzung nach einem der vorangehenden Ansprüche, bei der das Copolymer A und/oder das Copolymer B polymerisierte Einheiten von mindestens einer copolymerisierbaren äthylenisch ungesättigten Säure umfassen, die aus einer äthylenisch ungesättigten Karbonsäure oder Sulfonsäure ausgewählt ist.

25. Latexzusammensetzung nach Anspruch 24, bei der die Saüre eine aliphatische Alpha, Beta ungesättigte Carbonsäure ist.

26. Latexzusammensetzung nach einem der vorangehenden Ansprüche, bei der das Copolymer A und/oder das Copolymer B polymerisierte Einheiten von mindestens einer Art von Comonomer aufweisen, um eine Vernetzungsfunktionalität vorzusehen.

27. Latexzusammensetzung nach einem der vorangehenden Ansprüche, bei der die Zusammensetzung mindestens ein klebrigmachendes Harz aufweist.

28. Latexzusammensetzung nach einem der vorangehenden Ansprüche, bei der das Copolymer A durch einen mit Monomeren übersättigten Polymerisationsvorgang hergestellt worden ist.

29. Verwendung einer wäßrigen Latexzusammensetzung nach einem der vorangehenden Ansprüche als eine einen kontaktkleber bildende Zusammensetzung.

**Revendications**

1. Composition aqueuse de latex comprenant au moins un copolymère A et au moins un copolymère B, dans laquelle :

A est un copolymère amorphe comprenant des motifs polymérisés d'au moins un comonomère provoquant une plastification interne, copolymère qui possède une Tg comprise dans l'intervalle de — 50 à une température inférieure à 0 °C ; et

B est un copolymère cristallin comprenant des motifs polymérisés de chlorure de vinylidène, copolymère qui possède une Tg non supérieure à 80 °C,

13

et dans laquelle le rapport pondéral sur base anhydre du copolymère A qui est au moins présent au copolymère B qui est au moins présent est compris dans l'intervalle de 95 : 5 à 10 : 90 ;

et dans laquelle le copolymère A qui est au moins présent possède un poids moléculaire modal Mp (tel qu'il est défini dans la présente invention), compris dans l'intervalle de 100 000 à 700 000 ;

ladite composition donnant après séchage des couches aptes à la mise en contact.

2. Composition aqueuse de latex suivant la revendication 1, dans laquelle le copolymère A qui est au moins présent dans ladite composition comprend des motifs polymérisés (a) d'au moins un monomère choisi entre des acrylates et méthacrylates d'alkyle ayant 1 à 12 atomes de carbone dans le groupe alkyle, des acrylates et méthacrylates d'alkoxyalkyle ayant 1 à 12 atomes de carbone dans le groupe alkyle, le chlorure de vinylidène, le chlorure de vinyle, l'acrylonitrile, le styrène, l'acétate de vinyle et l'éther vinyl-éthylique.

3. Composition aqueuse de latex suivant la revendication 1 ou la revendication 2, dans laquelle le copolymère A qui est au moins présent dans ladite composition comprend des motifs polymérisés d'au moins un acide copolymérisable à insaturation éthylénique.

4. Composition aqueuse de latex suivant l'une quelconque des revendications précédentes, dans laquelle le copolymère B qui est au moins présent comprend des motifs polymérisés de chlorure de vinylidène et des motifs polymérisés (b) d'au moins un comonomère choisi entre des acrylates et méthacrylates d'alkyle ayant 1 à 12 atomes de carbone dans le groupe alkyle, des acrylates et méthacrylates d'alkoxyalkyle ayant 1 à 12 atomes de carbone dans le groupe alkyle, le chlorure de vinyle, le styrène, l'acrylonitrile, l'acétate de vinyle, l'éther vinyl-éthylique, l'éthylène, le cis- et le trans-1,3-butadiène, le cis- et le trans-isoprène, le cis- et le trans-chloroprène, le 1-décène, le 1-pentène et le 1-octène.

5. Composition aqueuse de latex suivant l'une quelconque des revendications précédentes, dans laquelle le copolymère B qui est au moins présent dans ladite composition comprend des motifs polymérisés d'au moins un acide copolymérisable à insaturation éthylénique.

6. Composition aqueuse de latex suivant l'une quelconque des revendications précédentes, dans laquelle le rapport pondéral sur base anhydre du copolymère A qui est au moins présent au copolymère B qui est au moins présent est compris dans l'intervalle de 85 : 15 à 15 : 85.

7. Composition aqueuse de latex suivant l'une quelconque des revendications précédentes, dans laquelle la Tg du copolymère A qui est au moins présent est comprise dans l'intervalle de — 40 à — 5 °C.

8. Composition aqueuse de latex suivant l'une quelconque des revendications précédentes, dans laquelle le copolymère A qui est au moins présent comprend 10 à 100 % en poids de motifs polymérisés (a) autres que des motifs de chlorure de vinyle, 0 à 90 % en poids de motifs polymérisés d'au moins un comonomère provoquant une plastification interne, autre qu'un ou plusieurs comonomères formant des motifs polymérisés entrant dans le cadre défini pour les motifs (a), 0 à 50 % en poids de motifs polymérisés de chlorure de vinyle et 0 à 10 % en poids d'au moins un acide copolymérisable à insaturation éthylénique.

9. Composition aqueuse de latex suivant l'une quelconque des revendications précédentes, dans laquelle le copolymère A qui est au moins présent comprend 10 à 70 % en poids de motifs polymérisés de chlorure de vinylidène, 30 à 90 % en poids de motifs polymérisés d'au moins un comonomère provoquant une plastification interne, 0 à 50 % en poids de motifs polymérisés de chlorure de vinyle et 0 à 10 % en poids de motifs polymérisés d'au moins un acide copolymérisable à insaturation éthylénique.

10. Composition aqueuse de latex suivant la revendication 9, dans laquelle la proportion de motifs polymérisés de chlorure de vinylidène dans le copolymère A est comprise dans l'intervalle de 20 à 60 % en poids.

11. Composition aqueuse de latex suivant la revendication 9 ou la revendication 10, dans laquelle la proportion de motifs polymérisés du comonomère provoquant une plastification interne qui est au moins présent dans le copolymère A est comprise dans l'intervalle de 40 à 80 % en poids.

12. Composition aqueuse de latex suivant l'une quelconque des revendications 9 à 11, dans laquelle la proportion de motifs polymérisés de l'acide copolymérisable à insaturation éthylénique qui est au moins présent dans le copolymère A est comprise dans l'intervalle de 0,1 à 8 % en poids.

13. Composition aqueuse de latex suivant l'une quelconque des revendications précédentes, dans laquelle les motifs polymérisés du comonomère provoquant une plastification interne qui est au moins présent dans le copolymère A sont dérivés d'au moins un monomère choisi entre l'acrylate de n-butyle et l'acrylate de 2-éthylhexyle.

14. Composition aqueuse de latex suivant l'une quelconque des revendications précédentes, dans laquelle la Mp du copolymère A qui est au moins présent est comprise dans l'intervalle de 100 000 à 500 000.

15. Composition aqueuse de latex suivant l'une quelconque des revendications précédentes, dans lequel la Tg du copolymère B qui est au moins présent est comprise dans l'intervalle de — 50 à 80 °C.

16. Composition aqueuse de latex suivant l'une quelconque des revendications précédentes, dans laquelle le copolymère B qui est au moins présent comprend 70 à 98 % en poids de motifs polymérisés de chlorure de vinylidène, 2 à 30 % en poids de motifs polymérisés (b) et 0 à 10 % en poids de motifs polymérisés d'au moins un acide copolymérisable à insaturation éthylénique.

17. Composition aqueuse de latex suivant la revendication 16, dans laquelle la proportion de motifs

14

polymérisés de chlorure de vinylidène dans le copolymère B est comprise dans l'intervalle de 80 à 95 % en poids.

18. Composition aqueuse de latex suivant la revendication 16 ou la revendication 17, dans laquelle la proportion de motifs polymérisés (b) dans le copolymère B est comprise dans l'intervalle de 2 à 20 % en poids.

19. Composition aqueuse de latex suivant l'une quelconque des revendications 16 à 18, dans laquelle la proportion de motifs polymérisés de l'acide copolymérisable à insaturation éthylénique qui est au moins présent dans le copolymère B est comprise dans l'intervalle de 0,1 à 8 % en poids.

20. Composition aqueuse de latex suivant l'une quelconque des revendications précédentes, caractérisée en ce que le copolymère B qui est au moins présent comprend des motifs polymérisés d'au moins un comonomère provoquant une plastification interne.

21. Composition aqueuse de latex suivant l'une quelconque des revendications précédentes, dans laquelle le copolymère B qui est au moins présent comprend des motifs polymérisés d'au moins un comonomère (autre que le chlorure de vinylidène), comonomère qui n'est pas un comonomère provoquant une plastification interne.

22. Composition aqueuse de latex suivant l'une quelconque des revendications 4 à 21 précédentes, dans laquelle les motifs polymérisés (b) dans le copolymère B sont dérivés d'au moins un monomère choisi entre des acrylates et méthacrylates d'alkyle ayant 1 à 12 atomes de carbone dans le groupe alkyle et le chlorure de vinyle.

23. Composition aqueuse de latex suivant la revendication 22, dans laquelle les motifs polymérisés (b) dans le copolymère B sont dérivés de l'acrylate de méthyle, du méthacrylate de méthyle, de l'acrylate de 2-éthylhexyle, de l'acrylate de n-butyle et du chlorure de vinyle.

24. Composition aqueuse de latex suivant l'une quelconque des revendications précédentes, dans laquelle le copolymère A et/ou le copolymère B comprennent des motifs polymérisés d'au moins un acide copolymérisable à insaturation éthylénique choisi entre un acide carboxylique à insaturation éthylénique ou un acide sulfonique.

25. Composition aqueuse de latex suivant la revendication 24, dans laquelle l'acide est un acide carboxylique aliphatique à insaturation alpha, bêta.

26. Composition aqueuse de latex suivant l'une quelconque des revendications précédentes, dans laquelle le copolymère A et/ou le copolymère B comprennent des motifs polymérisés d'au moins un type de comonomère présentant une fonctionnalité de réticulation.

27. Composition aqueuse de latex suivant l'une quelconque des revendications précédentes, qui comprend au moins une résine servant d'agent d'adhésivité.

28. Composition aqueuse de latex suivant l'une quelconque des revendications précédentes, dans laquelle le copolymère A a été formé par un procédé de polymérisation par noyage avec des monomères.

29. Utilisation d'une composition aqueuse de latex suivant l'une quelconque des revendications précédentes comme composition formant un adhésif de contact.